# EUROPÄISCHE PATENTSCHRIFT

(11) **EP 3 710 652 B1**
(45) Veröffentlichungstag und Bekanntmachung des Hinweises auf die Patenterteilung: **17.05.2023**
(21) Anmeldenummer: 18793592.9
(22) Anmeldetag: 15.10.2018
(51) Int. Cl.: E04H 6/34, E04H 6/36, E04H 6/42

(54) **PARKROBOTER**
PARKING ROBOT
ROBOT DE MISE EN STATIONNEMENT

(30) Priorität: 17.11.2017 DE 102017220596
(43) Veröffentlichungstag der Anmeldung: 23.09.2020
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2018/077983
(87) Internationale Veröffentlichungsnummer: WO 2019/096508

(56) Entgegenhaltungen:
- WO-A1-95/08037
- WO-A1-2005/118436
- CN-B- 101 915 003
- FR-A1- 2 644 196
- US-A1- 2010 161 128

## Beschreibung

Die Erfindung betrifft einen Parkroboter.

### Stand der Technik

Die Offenlegungsschrift DE 39 17 475 A1 beschreibt ein Transportsystem für ein Parkhaus. Ein Parkroboter versetzt dabei Personenkraftwagen zu den Parkpositionen und holt die Personenkraftwagen von dort zum Verlassen des Parkhauses ab. Der Parkroboter besteht aus einer arretierbaren Plattform mit einer verfahrbaren Hubbühne, welche vier die Räder eines Personenkraftwagens zum Anheben umfassende Hubvorrichtungen aufweist.

Die Offenlegungsschrift DE 10 2012 101 601 A1 beschreibt ein Parkhaus, in welchem ein oder mehrere Parkroboter installiert sind. Die Parkroboter arbeiten wie in einem Hochregallagersystem mithilfe der aus diesem Industriefeld entwickelten Technologie der Fördertechnik. Dafür wird jedes Fahrzeug in dem Parkhaus auf eine bewegliche Parkplattform in Gestalt einer Palette gefahren.

Die Offenlegungsschrift DE 10 2014 221 770 A1 beschreibt ein Verfahren zum Betreiben eines Abschlepproboters. Der Abschlepproboter kann als ein Parkroboter gebildet sein.

Aus der Offenlegungsschrift FR 2644196 A1 ist ein Transportroboter für Kraftfahrzeuge bekannt, der zwei separate Transportflächenabschnitte aufweist.

Aus der Offenlegungsschrift WO 2005/118436 A1 ist ein Verfahren zum Fördern von Gütern mit mindestens einem in einem Lager autonom verfahrbaren Fahrzeug. Das Fahrzeug erhält einen Auftrag bezüglich eines abzuholenden oder abzugebenden Gutes und/oder eines Zielortes z.B. einer Lagerstelle im und/oder eines zurückzulegenden Weges. Am Zielort wird das Gut selbsttätig übernommen bzw. aufgeladen oder abgegeben bzw. abgeladen. Es können mehrere derartige Fahrzeuge gekoppelt werden können.

Aus der Offenlegungsschrift US 2010/131128 A1 ist automatisches Parkleitsystem bekannt, umfassend einen beweglichen Parkroboter zum Beladen und Tragen eines zu parkenden Fahrzeugs, einen Parkleitserver, der dem Parkroboter eine Bewegungsbahn zum Zielparkplatz zur Verfügung stellt, und einen oder mehrere Kommunikationsstationen, die in der Nähe eines zugänglichen Parkbereichs installiert sind, um eine Bewegungsbahn des Parkroboters in Echtzeit durch Kommunikation mit dem Parkroboter zu steuern. Die Offenlegungsschrift WO 95/080337 A1 zeigt ein mechanisches System zur vollautomatischen Steuerung der Lagerung von Gegenständen, insbesondere von Kraftfahrzeugen mit mindestens einem Wagen der ein Fahrgestell auf Rädern mit einem autonomen Antriebsmechanismus aufweist. Der Wagen umfasst Schwenkmittel, die ihn um den Schnittpunkt zwischen der Symmetrieachse der Zufahrtsbahn und der Symmetrieachse der Zelle, in der das Fahrzeug be- oder entladen werden soll, schwenken lassen.

Ein weiterer Parkroboter gemäß dem Oberbegriff des Anspruchs 1 wird in Dokument CN 101 915 003 B offenbart.

Bekannte Parkroboter können aufgrund ihrer Größe und/oder ihrer mangelnden Flexibilität Schwierigkeiten haben, um enge Kurven zu fahren oder eine Rampe hochzufahren.

### Offenbarung der Erfindung

Die der Erfindung zugrunde liegende Aufgabe ist darin zu sehen, einen Parkroboter bereitzustellen, der effizient zum Parken von Kraftfahrzeugen eingesetzt werden kann.

Diese Aufgabe wird mittels des jeweiligen Gegenstands des unabhängigen Anspruchs gelöst. Vorteilhafte Ausgestaltungen der Erfindung sind Gegenstand von abhängigen Unteransprüchen.

Nach einem Aspekt wird ein Parkroboter bereitgestellt, umfassend:
eine Transportfläche zum Transportieren eines Kraftfahrzeugs,
wobei die Transportfläche zumindest zwei voneinander separate Transportflächenabschnitte aufweist,
wobei zwischen den Transportflächenabschnitten eine flexible Verbindung gebildet ist, so dass die zumindest zwei Transportflächenabschnitte, also die miteinander verbundenen Transportflächenabschnitte, miteinander beweglich verbunden sind.

Die Erfindung basiert auf der Erkenntnis, dass die obige Aufgabe dadurch gelöst werden kann, dass zwischen den zumindest zwei Transportflächenabschnitten, also zwischen den Transportflächenabschnitten, eine flexible Verbindung gebildet ist. Der Parkroboter ist somit als Ganzes nicht mehr ein starrer und damit nicht-flexibler Gegenstand. Vielmehr umfasst der Parkroboter zumindest zwei zueinander bewegliche Teile: Die beiden Transportflächenabschnitte. Der Parkroboter gewinnt dadurch an Beweglichkeit respektive an Flexibilität im Hinblick auf eine Manövrierbarkeit. Dies ermöglicht es dem Parkroboter in vorteilhafter Weise, auch Kurven zu fahren oder Rampen zu befahren, die ohne diese Flexibilität nicht fahrbar oder befahrbar wären.

Dadurch wird also der technische Vorteil bewirkt, dass der Parkroboter effizient zum Parken von Kraftfahrzeugen eingesetzt werden kann.

Der Parkroboter ist also insbesondere zum Parken von Kraftfahrzeugen ausgebildet.

Die Formulierung "zumindest zwei voneinander separate Transportflächenabschnitte" umfasst insbesondere genau zwei voneinander separate Transportflächenabschnitte und umfasst insbesondere mehr als zwei, zum Beispiel drei, voneinander separate Transportflächenabschnitte. Es soll im Zusammenhang mit einer bestimmten Anzahl, zum Beispiel zwei, von Transportflächenabschnitten stets die Formulierung "zumindest" mitgelesen werden.

In einer Ausführungsform ist vorgesehen, dass die flexible Verbindung ein Seil und/oder eine Kette umfasst.

Dadurch wird zum Beispiel der technische Vorteil bewirkt, dass die flexible Verbindung einfach gebildet werden kann.

Das Seil ist zum Beispiel ein Drahtseil. Die Kette ist zum Beispiel eine Panzerkette.

In einer Ausführungsform ist vorgesehen, dass die flexible Verbindung ein oder mehrere Gelenke umfasst. Die Verbindung ist also beispielsweise eine gelenkige Verbindung. Das heißt also insbesondere, dass die zumindest Transportflächenabschnitte gelenkig miteinander verbunden sind.

Dadurch wird zum Beispiel der technische Vorteil bewirkt, dass die flexible Verbindung einfach gebildet werden kann.

In einer Ausführungsform ist der Parkroboter als ein Gelenkfahrzeug ausgebildet. Das heißt insbesondere, dass die zumindest zwei Transportflächenabschnitte mittels eines Gelenks miteinander gelenkig verbunden sind.

In einer Ausführungsform ist vorgesehen, dass die flexible Verbindung ein Rad oder mehrere Räder umfasst, auf welchen die flexible Verbindung abrollen kann.

Dadurch wird zum Beispiel der technische Vorteil bewirkt, dass effizient verhindert werden kann, dass die flexible Verbindung auf einem Boden aufsetzt oder auf diesem rutscht.

Zum Beispiel umfasst die flexible Verbindung eine Platte, wobei an einer Unterseite der Platte das eine oder die mehreren Räder angeordnet sind, wobei die Platte über zwei weitere flexible Verbindungen jeweils mit den zumindest zwei Transportflächenabschnitten beweglich verbunden ist. Die zwei weiteren flexiblen Verbindungen sind beispielsweise analog zur flexiblen Verbindung gebildet. Das heißt also, dass Merkmale betreffend die flexible Verbindung beispielsweise für die zwei weiteren flexiblen Verbindungen vorgesehen sind.

In einer Ausführungsform ist vorgesehen, dass die zumindest zwei Transportflächenabschnitte jeweils ein oder mehrere Räder umfassen, auf welchen die zumindest zwei Transportflächenabschnitte abrollen können.

Dadurch wird zum Beispiel der technische Vorteil bewirkt, dass die zumindest zwei Transportflächenabschnitte effizient bewegt werden können.

In einer Ausführungsform umfasst der Parkroboter ein motorgetriebenes Zugfahrzeug zum Ziehen der zumindest zwei Transportflächenabschnitte.

Dadurch wird zum Beispiel der technische Vorteil bewirkt, dass die zumindest zwei Transportflächenabschnitte effizient bewegt werden können.

Das Zugfahrzeug umfasst in einer Ausführungsform einen der zumindest zwei Transportflächenabschnitte.

Das Zugfahrzeug ist in einer Ausführungsform frei von einem der zumindest zwei Transportflächenabschnitte. Das heißt also zum Beispiel, dass das Zugfahrzeug und die zumindest zwei Transportflächenabschnitte getrennte Elemente sind.

In einer Ausführungsform ist vorgesehen, dass an einem oder an allen Transportflächenabschnitten ein oder mehrere Betriebskomponenten für einen Betrieb des Parkroboters angeordnet sind.

Dadurch wird zum Beispiel der technische Vorteil bewirkt, dass die Transportflächenabschnitte effizient genutzt werden.

Eine Betriebskomponente ist zum Beispiel eine der folgenden Betriebskomponenten: Steuerungseinrichtung zum Steuern des Parkroboters, Kommunikationsschnittstelle zum Kommunizieren über ein drahtloses Kommunikationsnetzwerk, Umfeldsensor, zum Beispiel Radarsensor, Videosensor, Ultraschallsensor, Lidarsensor, Magnetfeldsensor, Infrarotsensor, Antriebsmotor, beispielsweise Elektromotor, elektrischer Energiespeicher für den Elektromotor.

In einer Ausführungsform ist vorgesehen, dass eine oder mehrere Betriebskomponenten zusätzlich oder anstelle zur Anordnung der einen oder der mehreren Betriebskomponenten an einem oder allen Transportflächenabschnitten an einem von den Transportflächenabschnitten separaten Bauteil des Parkroboters angeordnet ist. Das separate Bauteil ist zum Beispiel in einer Ausführungsform das Zugfahrzeug.

In einer Ausführungsform umfasst die Transportfläche mehr als zwei voneinander separate Transportflächenabschnitte, beispielsweise drei Transportflächenabschnitte. Zwischen den mehreren Transportflächenabschnitten ist jeweils eine flexible Verbindung gebildet, so dass die jeweiligen Transportflächenabschnitte miteinander beweglich verbunden sind. Die jeweiligen Verbindungen sind zum Beispiel identisch oder zum Beispiel unterschiedlich ausgebildet.

Der Vorteil von mehr als zwei Transportflächenabschnitten liegt insbesondere darin begründet, dass so Kraftfahrzeuge unterschiedlicher Längen mittels des Parkroboters effizient transportiert werden können.

In einer Ausführungsform ist vorgesehen, dass die Transportflächenabschnitte dafür vorgesehen sind, dass das Kraftfahrzeug mit seinen Rädern auf den Transportflächenabschnitten während des Transports abgestellt ist.

In einer Ausführungsform ist vorgesehen, dass die Transportflächenabschnitte dafür vorgesehen sind, dass das Kraftfahrzeug mit seinem Unterboden auf den Transportflächenabschnitten während des Transports aufliegt.

Die flexible Verbindung weist gemäß einer Ausführungsform ein, beispielsweise ausschließlich ein, oder mehrere Freiheitsgrade auf. Ein Freiheitsgrad liegt beispielsweise bezogen auf eine Längsachse des Parkroboters in Querrichtung. Ein Freiheitsgrad liegt erfindungsgemäß, bezogen auf eine Längsachse des Parkroboters in Lotrichtung.

Das heißt also insbesondere, dass dem Freiheitsgrad entsprechend mittels der flexiblen Verbindung eine Beweglichkeit ausschließlich in die Lotrichtung, oder eine Beweglichkeit in die Lotrichtung und in die Querrichtung, bewirkt ist.

Der Freiheitsgrad in Lotrichtung wird gemäß einer Ausführungsform mittels des Seils respektive der Kette, beispielsweise der Panzerkette, bewirkt.

Der Freiheitsgrad in Querrichtung wird gemäß einer Ausführungsform mittels des Gelenks bewirkt, also wenn der Parkroboter zum Beispiel als Gelenkfahrzeug ausgebildet ist.

Die Transportflächenabschnitte sind gemäß einer Ausführungsform von einem jeweiligen Anhänger umfasst. Das heißt also beispielsweise, dass mehrere Anhänger flexibel miteinander verbunden sind und beispielsweise von einer Zugmaschine geführt werden. Das heißt also beispielsweise, dass der Parkroboter zwei oder mehr Anhänger umfasst, die jeweils einen der Transportflächenabschnitte umfassen, wobei einer der Anhänger mit einer Zugmaschine beweglich verbunden ist.

Die Formulierung "respektive" umfasst insbesondere die Formulierung "und/oder".

Die Erfindung wird im Folgenden anhand von bevorzugten Ausführungsbeispielen näher erläutert. Hierbei zeigen
- Fig. 1 und 2: jeweils einen starren Parkroboter bei einer Rampenfahrt,
- Fig. 3: einen ersten Parkroboter,
- Fig. 4: einen zweiten Parkroboter,
- Fig. 5: einen dritten Parkroboter,
- Fig. 6: einen vierten Parkroboter,
- Fig. 7: einen fünften Parkroboter,
- Fig. 8: den Parkroboter gemäß Fig. 3 bei einer Rampenfahrt und
- Fig. 9: einen sechsten Parkroboter.

Im Folgenden können für gleiche Elemente bzw. Merkmale gleiche Bezugszeichen verwendet werden.

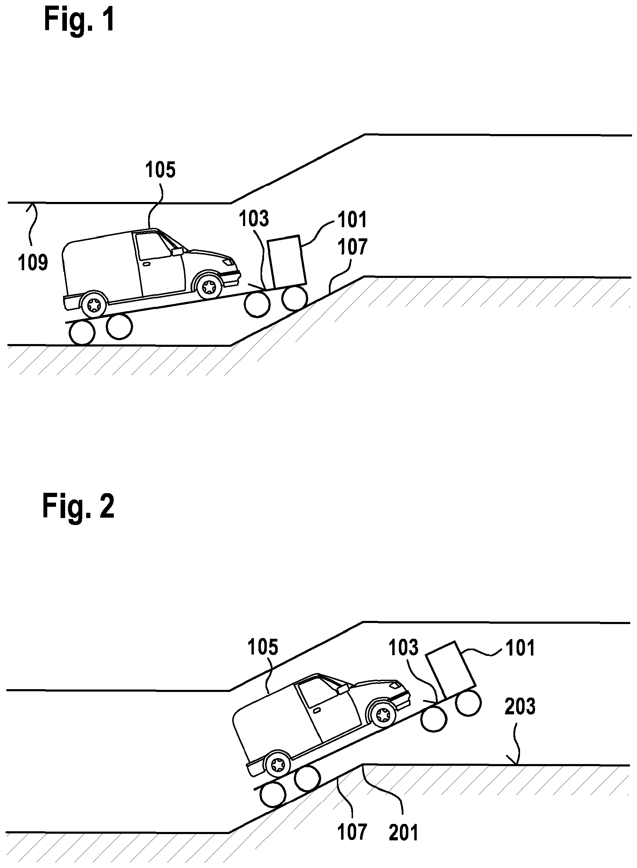

Fig. 1 zeigt einen starren Parkroboter 101 bei einer Fahrt auf einer Rampe 107.

Der Parkroboter 101 umfasst eine Transportfläche 103, auf welcher ein Kraftfahrzeug 105 abgestellt ist.

Die Transportfläche 103 umfasst keine zwei voneinander separate Transportflächenabschnitte, die beweglich miteinander verbunden sind.

Der Parkroboter 101 ist somit starr und nicht flexibel.

Aufgrund dieser mangelnden Flexibilität kann es dazu führen, dass das Kraftfahrzeug 105 bei der Rampenfahrt an eine Decke 109 anstößt. Dies insbesondere deshalb, da durch eine Länge des Parkroboters 101 und der Neigung der Rampe 107 sich der Abstand von der Decke 109 zum Kraftfahrzeug 105 verringert.

Fig. 2 zeigt den Parkroboter 101 gemäß Fig. 1 während einem Übergang von der Rampe 107 zu einer ebenen Fahrfläche 203, wobei die Rampe 107 am Ort 201 endet. Das heißt, dass am Ort 201 die schiefe Ebene der Rampe 107 endet und in die ebene Fahrfläche 203 übergeht.

An diesem Ort 201 kann es beispielsweise zu einem unkontrollierten Kippen des starren Parkroboters 101 und gegebenenfalls zu einem Aufsetzen an der Kante, also am Ort 201, kommen.

Wie die Fig. 1 weiter zeigt, kann beispielsweise der Parkroboter 101 aufgrund seiner mangelnden Flexibilität durch das Gewicht des Kraftfahrzeugs 105 und durch die in der "Luft hängenden Räder" gegebenenfalls zusammenknicken bzw. durchbrechen.

Weiter kann der Parkroboter 101 aufgrund seiner starren Ausgestaltung durch die Neigung der Rampe 107 und durch seine eigene Länge vorne und/oder hinten aufsetzen.

Eine Ursache hierfür ist beispielsweise, dass der Parkroboter 101 zum einen starr ausgestaltet ist und in der Regel länger als die zu transportierenden Kraftfahrzeuge ist, wobei aber Rampen, insbesondere die Steigungen, nur für übliche Länge von Kraftfahrzeugen ausgelegt sind.

Ein weiterer Grund (bzw. Hauptgrund) für das Aufsetzen ist der sehr viel kleinere Abstand des Roboterbodens zum Boden (Der Abstand beträgt zum Beispiel 2 cm bis 5 cm.), wohingegen ein Abstand zwischen einem Kraftfahrzeugboden und dem Boden beispielsweise 10 cm bis 20 cm beträgt. Dies ist weiter zusätzlich im Hinblick zu den üblichen Radständen von Kraftfahrzeugen zu sehen.

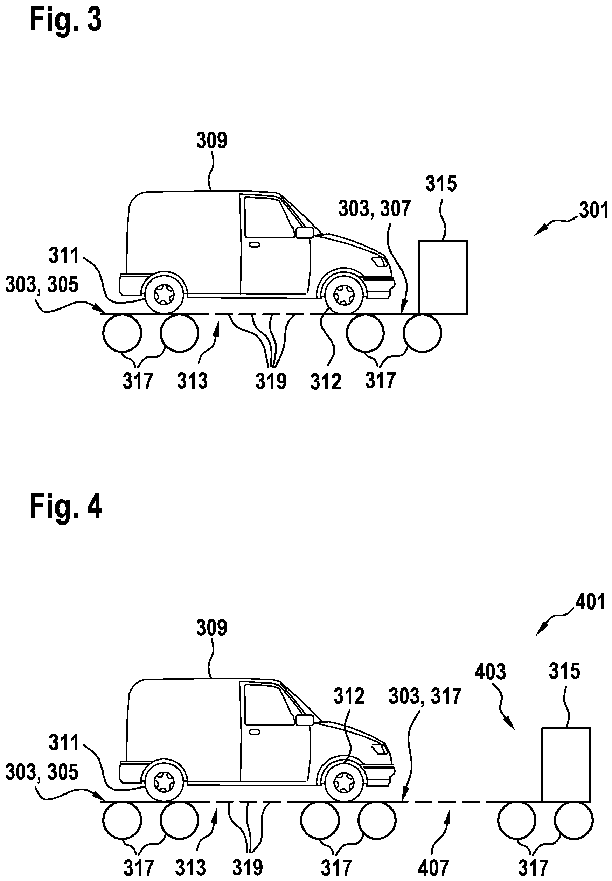

Fig. 3 zeigt einen ersten Parkroboter 301.

Der Parkroboter 301 umfasst eine Transportfläche 303 zum Transportieren eines Kraftfahrzeugs, vorliegend beispielhaft zum Transportieren eines Kraftfahrzeugs 309.

Die Transportfläche 303 umfasst zwei voneinander separate Transportflächenabschnitte 305, 307.

Das Kraftfahrzeug 309 steht mit seinen Vorderrädern 312 auf dem Transportflächenabschnitt 307 und steht mit seinen Hinterrädern 311 auf dem Transportflächenabschnitt 305.

Zwischen den beiden Transportflächenabschnitten 305, 307 ist eine flexible Verbindung 313 gebildet, sodass die beiden Transportflächenabschnitte 305, 307 beweglich verbunden sind.

Vorliegend ist für eine bessere Veranschaulichung dieser flexiblen Verbindung 313 eine gestrichelte Linie gezeichnet, wobei die einzelnen Striche der gestrichelten Linie mit dem Bezugszeichen 319 versehen sind.

Beispielsweise ist die flexible Verbindung durch eine Kette gebildet, wobei gemäß dieser Ausführungsform die einzelnen Striche 319 die Kettenglieder sind.

Beispielsweise ist die flexible Verbindung 313 durch eine Panzerkette gebildet.

Die flexible Verbindung 313 weist somit beispielsweise einen Freiheitsgrad relativ zu einer Längsachse des Parkroboters 301 in Lotrichtung auf. Das heißt also, dass die flexible Verbindung 313 beispielsweise eine Beweglichkeit in die Lotrichtung bewirkt.

Somit kann in vorteilhafter Weise der Parkroboter 301 eine Kontur einer Rampe effizienter und besser folgen, sodass beispielsweise ein Aufsetzen des Parkroboters auf dem Boden verhindert werden kann.

Der Parkroboter 301 umfasst ein Gehäuse 315, in welchem ein oder mehrere Betriebskomponenten des Parkroboters 301 angeordnet sind.

Das Gehäuse 315 ist vom Transportflächenabschnitt 307 umfasst.

Beispielsweise umfasst das Gehäuse 315 als eine Betriebskomponente einen Antriebsmotor des Parkroboters 301. In diesem Fall kann beispielsweise die Gesamtheit aus Antriebsmotor und Transportflächenabschnitt 307 als ein Zugfahrzeug bezeichnet werden, welches den Transportflächenabschnitt 305 zieht.

Die Transportflächenabschnitte 305, 307 sind an ihrer Unterseite mit Rädern 317 versehen, auf welchen die Transportflächenabschnitte 305, 307 abrollen.

Fig. 4 zeigt einen zweiten Parkroboter 401.

Der zweite Parkroboter 401 ist im Wesentlichen analog zum ersten Parkroboter 301 gebildet. Als ein Unterschied ist das Gehäuse 315 nun nicht mehr vom Transportflächenabschnitt 307 umfasst, sondern bildet eine hiervon getrennt eigenständige Einheit 403.

Gemäß dieser Ausführungsform ist die Einheit 403 umfassend das Gehäuse 315 an ihrer Unterseite ebenfalls mit Rädern 317 versehen, auf welchen das Gehäuse 315 abrollen kann.

Sofern das Gehäuse 315 als eine Betriebskomponente einen Antriebsmotor umfasst, kann die eigenständige Einheit 403 auch als eine Zugmaschine bezeichnet werden.

Die Einheit 403, beispielsweise die Zugmaschine, ist über eine weitere flexible Verbindung 407 mit dem Transportflächenabschnitt 307 verbunden. Hierbei ist diese weitere flexible Verbindung 407 beispielsweise analog zur flexiblen Verbindung 313 ausgestaltet.

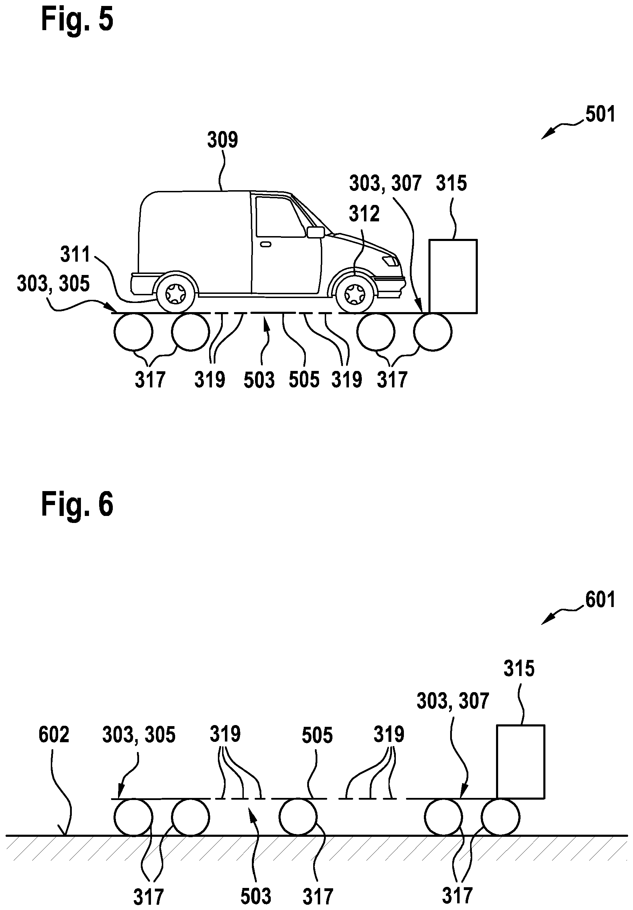

Fig. 5 zeigt einen dritten Parkroboter 501, der im Wesentlichen analog zum ersten Parkroboter 301 ausgebildet ist.

Der dritte Parkroboter 501 weist als einen Unterschied zum ersten Parkroboter 301 eine flexible Verbindung 503 zwischen den beiden Transportflächenabschnitten 305, 307 auf. Diese flexible Verbindung 503 weist als Unterschied zur flexiblen Verbindung 313 eine Platte 505 auf, die jeweils über eine eigenständige flexible Verbindung mit den entsprechenden Transportflächenabschnitten 305, 307 beweglich verbunden ist. Zeichnerisch ist dies in Fig. 5 durch die Striche 319 der entsprechend gestrichelten Linie zwischen den Transportflächenabschnitten 305, 307 und der Platte 505 dargestellt.

Fig. 6 zeigt einen vierten Parkroboter 601, der im Wesentlichen analog zum dritten Parkroboter 501 gemäß Fig. 5 aufgebaut ist.

Als ein Unterschied weist der vierte Parkroboter 601 an einer Unterseite der Platte 505 ein oder mehrere Räder 317 auf, auf welchen die Platte 505 abrollen kann. Dadurch wird in vorteilhafter Weise vermieden, dass die Platte 505 auf einen Boden 602 aufsetzt bzw. auf den Boden 602 rutscht.

Das Vorsehen einer solchen Platte 505 bewirkt in vorteilhafter Weise eine Stabilität der flexiblen Verbindung 503. Der Wesentliche Vorteil von einer oder in einer nicht gezeigten Ausführungsform von mehreren Platten ist insbesondere, dass die Geometrie der Rampe durch die Platten besser nachgebildet werden kann, wobei die Räder dafür da sind, dass die Platten nicht auf dem Boden schleifen. Dies wird desto wichtiger, je mehr Platten eingesetzt werden.

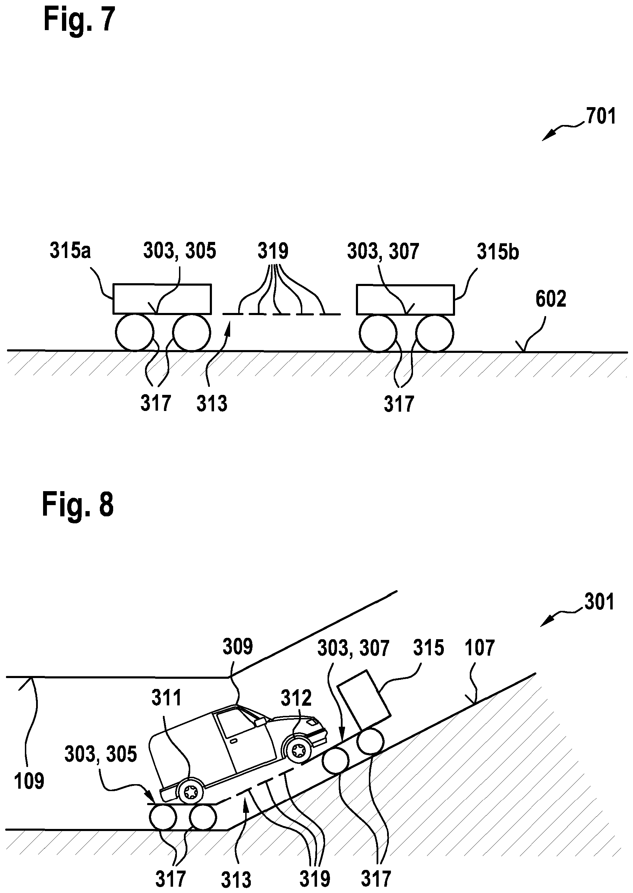

Fig. 7 zeigt einen fünften Parkroboter 701, der im Wesentlichen analog zum ersten Parkroboter 301 gemäß Fig. 3 aufgebaut ist.

Als ein Unterschied sind die einzelnen Betriebskomponenten des Parkroboters 701 nicht mehr in einem einzigen Gehäuse 315 integriert, sondern über zwei Gehäuse 315a, 315b, die jeweils von den beiden Transportflächenabschnitten 305, 307 umfasst sind, verteilt.

In einer nicht gezeigten Ausführungsform ist vorgesehen, dass die Betriebskomponenten einschließlich Antrieb in jeder möglichen Kombination über die zumindest zwei Transportflächenabschnitte verteilt sind.

Fig. 8 zeigt den ersten Parkroboter 301 während einer Rampenfahrt auf einer Rampe 107. Deutlich zu erkennen ist, dass aufgrund der flexiblen Verbindung 313 die Nachteile, wie sie im Zusammenhang mit den Figuren 1 und 2 beschrieben wurden, vermieden werden können.

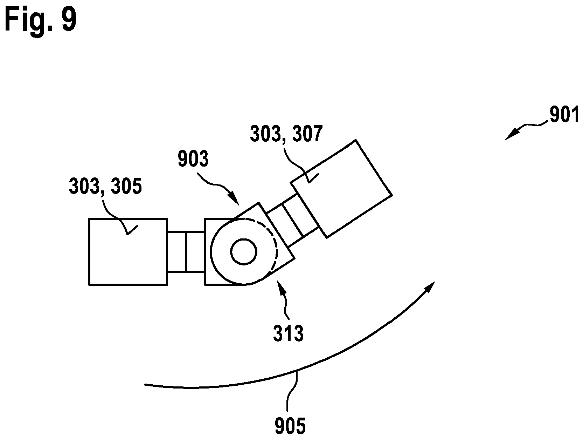

Fig. 9 zeigt einen sechsten Parkroboter 901, wobei dieser im Wesentlichen analog zum ersten Parkroboter 301 ausgebildet ist.

Als ein Unterschied weist die flexible Verbindung 313 eine Gelenkverbindung 903 auf, sodass der Parkroboter 901 analog zu einem Gelenkbus ausgestaltet ist.

Insofern kann der Parkroboter 901 auch als ein Gelenkfahrzeug bezeichnet werden.

Durch diese Gelenkverbindung 903 wird beispielsweise der technische Vorteil bewirkt, dass diese flexible Verbindung 313 einen Freiheitsgrad aufweist, der bezogen auf eine Längsachse des Parkroboters 901 in Querrichtung liegt. Das heißt also, dass die flexible Verbindung 313 eine Beweglichkeit in die Querrichtung bewirkt.

Dadurch wird in vorteilhafter Weise der technische Vorteil bewirkt, dass eine verbesserte Kurvenfahrt des Parkroboters 901 ermöglicht ist. Dies ist in Fig. 9 symbolisch durch einen kurvigen Pfeil mit dem Bezugszeichen 905 dargestellt.

Zusammenfassend basiert die Erfindung insbesondere und unter anderem auf dem Gedanken, eine flexible Verbindung zwischen zumindest zwei Transportflächenabschnitten vorzusehen, auf welchen ein Kraftfahrzeug für einen Transport mittels des Parkroboters abgestellt wird. Das heißt also, dass der Parkroboter in seiner Länge nicht mehr aus einem starren Stück aufgebaut ist, sondern dass es bewegliche Teile, vorliegend die zumindest beiden Transportflächenabschnitte, entlang der Länge, also entlang der Längsachse, des Parkroboters gibt.

Durch diese Flexibilität wird beispielsweise der technische Vorteil bewirkt, dass der Parkroboter ein ähnliches Verhalten bei einer Rampenfahrt zeigt, als wenn ein Kraftfahrzeug selbst diese Rampe hochfährt. Hierbei befinden sich (verglichen mit einer Fahrt des Kraftfahrzeugs selbst auf der Rampe) die Kraftfahrzeugreifen um die Höhe der Transportflächenabschnitte relativ zur Fahrfläche über der Fahrfläche oberhalb der Fahrfläche (siehe Fig. 8).

Dadurch wird zum Beispiel weiter der technische Vorteil bewirkt, dass ein Kraftfahrzeug nicht gegen eine Decke während einer Rampenfahrt oder während eines Übergangs von einer ebenen Fahrfläche zur Rampe oder umgekehrt stößt.

Weiter kann effizient vermieden werden, dass der Parkroboter übermäßig in seiner Mitte durch das Kraftfahrzeuggewicht belastet wird und dadurch beispielsweise zusammenknicken oder durchbrechen kann.

Weiter wird insbesondere der technische Vorteil bewirkt, dass in der "Luft hängende Räder" des Parkroboters vermieden werden können. Die Räder des Parkroboters behalten also in vorteilhafter Weise auch während einer Rampenfahrt bzw. während eines Übergangs von einer ebenen Fahrfläche zur Rampe oder umgekehrt einen Bodenkontakt.

Weiter kann in vorteilhafter Weise ein Aufsetzen des Parkroboters bei Beginn oder am Ende der Rampenfahrt effizient vermieden werden.

Weiter kann beim Übergang von der Rampe zur ebenen Fahrfläche in unkontrolliertes Kippen des Parkroboters mit einem gegebenenfalls Aufsetzen des Parkroboters an der Kante vermieden werden.

Weiter kann in vorteilhafter Weise eine Manövrierbarkeit des Parkroboters, insbesondere entlang einer Kurve, effizient verbessert werden. Dies ermöglicht weiter in vorteilhafter Weise, dass der Parkroboter in einer Vielzahl an unterschiedlichen Parkhäusern, allgemein Parkplätzen, eingesetzt werden kann.

## Patentansprüche

1. Parkroboter (301, 401, 501, 601, 701, 901), umfassend:
eine Transportfläche (303) zum Transportieren eines Kraftfahrzeugs (309), wobei die Transportfläche (303) zumindest zwei voneinander separate Transportflächenabschnitte (305, 307) aufweist,
wobei zwischen den Transportflächenabschnitten (305, 307) eine flexible Verbindung (313, 503) gebildet ist, so dass die zumindest zwei Transportflächenabschnitte (305, 307) miteinander beweglich verbunden sind, **dadurch gekennzeichnet, dass** die flexible Verbindung (313, 503) einen Freiheitsgrad aufweist, welcher bezogen auf eine Längsachse des Parkroboters (301, 401, 501, 601, 701, 901) in Lotrichtung liegt, sodass dem Freiheitsgrad entsprechend mittels der flexiblen Verbindung (313, 503) eine Beweglichkeit in die Lotrichtung bewirkt ist.

2. Parkroboter (301, 401, 501, 601, 701, 901) nach Anspruch 1, wobei die flexible Verbindung (313, 503) ein Seil und/oder eine Kette (319) umfasst.

3. Parkroboter (301, 401, 501, 601, 701, 901) nach Anspruch 1 oder 2, wobei die flexible Verbindung (313, 503) ein oder mehrere Gelenke (903) umfasst.

4. Parkroboter (301, 401, 501, 601, 701, 901) nach einem der vorherigen Ansprüche, wobei die flexible Verbindung (313, 503) einen oder mehrere Räder (317) umfasst, auf welchen die flexible Verbindung (313, 503) abrollen kann.

5. Parkroboter (301, 401, 501, 601, 701, 901) nach einem der vorherigen Ansprüche, wobei die zumindest zwei Transportflächenabschnitte (305, 307) jeweils ein oder mehrere Räder (317) umfassen, auf welchen die Transportflächenabschnitte (305, 307) abrollen können.

6. Parkroboter (301, 401, 501, 601, 701, 901) nach einem der vorherigen Ansprüche, umfassend ein motorgetriebenes Zugfahrzeug zum Ziehen der zumindest zwei Transportflächenabschnitte (305, 307).

7. Parkroboter (301, 401, 501, 601, 701, 901) nach einem der vorherigen Ansprüche, wobei an einem oder an allen Transportflächenabschnitten (305, 307) ein oder mehrere Betriebskomponenten (315, 315a, 315b, 403) für einen Betrieb des Parkroboters (301, 401, 501, 601, 701, 901) angeordnet sind.

## Claims

1. Parking robot (301, 401, 501, 601, 701, 901), comprising:
a transport surface (303) for transporting a motor vehicle (309), the transport surface (303) having at least two transport surface sections (305, 307) that are separate from one another,
wherein a flexible connection (313, 503) is formed between the transport surface sections (305, 307), so that the at least two transport surface sections (305, 307) are movably connected to each other,
**characterized in that** the flexible connection (313, 503) has a degree of freedom which, with reference to a longitudinal axis of the parking robot (301, 401, 501, 601, 701, 901), lies in the vertical direction, so that mobility in the vertical direction corresponding to the degree of freedom is effected by means of the flexible connection (313, 503).

2. Parking robot (301, 401, 501, 601, 701, 901) according to Claim 1, wherein the flexible connection (313, 503) comprises a rope and/or a chain (319).

3. Parking robot (301, 401, 501, 601, 701, 901) according to Claim 1 or 2, wherein the flexible connection (313, 503) comprises one or more joints (903).

4. Parking robot (301, 401, 501, 601, 701, 901) according to one of the preceding claims, wherein the flexible connection (313, 503) comprises one or more wheels (317), on which the flexible connection (313, 503) can roll.

5. Parking robot (301, 401, 501, 601, 701, 901) according to one of the preceding claims, wherein the at least two transport surface sections (305, 307) each comprise one or more wheels (317), on which the transport surface sections (305, 307) can roll.

6. Parking robot (301, 401, 501, 601, 701, 901) according to one of the preceding claims, comprising a motor-operated towing vehicle for towing the at least two transport surface sections (305, 307).

7. Parking robot (301, 401, 501, 601, 701, 901) according to one of the preceding claims, wherein one or more operating components (315, 315a, 315b, 403) for operating the parking robot (301, 401, 501, 601, 701, 901) are arranged on one or all the transport surface sections (305, 307).

## Revendications

1. Robot de stationnement (301, 401, 501, 601, 701, 901), comprenant :
une surface de transport (303) pour transporter un véhicule automobile (309), la surface de transport (303) présentant au moins deux sections de surface de transport (305, 307) séparées l'une de l'autre,
une liaison flexible (313, 503) étant formée entre les sections de surface de transport (305, 307), de telle sorte que les au moins deux sections de surface de transport (305, 307) sont reliées entre elles de manière mobile, **caractérisé en ce que** la liaison flexible (313, 503) présente un degré de liberté qui, par rapport à un axe longitudinal du robot de stationnement (301, 401, 501, 601, 701, 901), se situe dans la direction verticale, de telle sorte qu'en fonction du degré de liberté, la liaison flexible (313, 503) assure une mobilité dans la direction verticale.

2. Robot de stationnement (301, 401, 501, 601, 701, 901) selon la revendication 1, dans lequel la liaison flexible (313, 503) comprend un câble et/ou une chaîne (319) .

3. Robot de stationnement (301, 401, 501, 601, 701, 901) selon la revendication 1 ou 2, dans lequel la liaison flexible (313, 503) comprend une ou plusieurs articulations (903).

4. Robot de stationnement (301, 401, 501, 601, 701, 901) selon l'une quelconque des revendications précédentes, dans lequel la liaison flexible (313, 503) comprend une ou plusieurs roues (317) sur lesquelles la liaison flexible (313, 503) peut rouler.

5. Robot de stationnement (301, 401, 501, 601, 701, 901) selon l'une quelconque des revendications précédentes, dans lequel les au moins deux sections de surface de transport (305, 307) comprennent chacune une ou plusieurs roues (317) sur lesquelles les sections de surface de transport (305, 307) peuvent rouler.

6. Robot de stationnement (301, 401, 501, 601, 701, 901) selon l'une quelconque des revendications précédentes, comprenant un véhicule de traction motorisé pour tirer les au moins deux sections de surface de transport (305, 307).

7. Robot de stationnement (301, 401, 501, 601, 701, 901) selon l'une quelconque des revendications précédentes, dans lequel un ou plusieurs composants d'exploitation (315, 315a, 315b, 403) sont agencés sur l'une des ou toutes les sections de surface de transport (305, 307) pour une exploitation du robot de stationnement (301, 401, 501, 601, 701, 901).
